# EUROPEAN PATENT SPECIFICATION

(11) **EP 3 103 777 B1**
(45) Date of publication and mention of the grant of the patent: **24.03.2021**
(21) Application number: 15746828.1
(22) Date of filing: 05.02.2015
(51) Int. Cl.: C03C 27/12, B32B 17/10

(54) **LAMINATED GLASS PRODUCTION METHOD**
VERBUNDGLASHERSTELLUNGSVERFAHREN
PROCÉDÉ DE FABRICATION DE VERRE FEUILLETÉ

(30) Priority: 05.02.2014 JP 2014020677
(43) Date of publication of application: 14.12.2016
(73) Proprietor: AGC Inc., Tokyo 100-8405 (JP)
(72) Inventor: YAMADA Daisuke, Tokyo 100-8405 (JP); OGAWA Naoki, Tokyo 100-8405 (JP); IRIE Tetsuji, Tokyo 100-8405 (JP)
(74) Representative: Müller-Boré & Partner Patentanwälte PartG mbB
(86) International application number: PCT/JP2015/053226
(87) International publication number: WO 2015/119192

(56) References cited:
- EP-A2- 0 402 875
- WO-A1-2013/051455
- JP-A- S5 440 817
- JP-U- 3 013 662
- JP-U- H0 616 938
- US-A- 3 231 440
- US-A- 3 242 026
- US-A- 3 841 932
- US-A- 4 170 688
- US-A- 5 095 639

## Description

The present invention relates to a method for producing a laminated glass.

In various fields of vehicles such as automobiles, architectural structures and the like, laminated glass in which an intermediate film is sandwiched between two glass plates has been widely used. In the laminated glass, a laminate in which the glass plate, the intermediate film and the glass plate are laminated in this order is heated and pressurized to obtain a laminated glass, and thereafter, a part (such as a display panel, a room mirror base or a rain sensor) is bonded on a glass surface by post-processing with heating, or a cured film (such as an UV-ray cutting film or a water-repellent film) is formed thereon, in some cases (for example, Patent Document 1). EP 0 402 85 A2 describes a glass repair method and apparatus. US 3,841,932 A describes a method and an apparatus for repairing cracks in windshields. US 5,095,639 A describes a method of drying windshield shatter crack cavities using a hand-held radiant heating device. US 3,231,440 A describes a method of laminating glass. US 3,242,026 A describes a method of bonding a conductive element to a nonconducting element.

Patent Document 1: Japanese Utility Model No. 3013662

The present inventors have found that when the post-processing with heating is performed in bonding of the part, forming of the cured film or the like, the intermediate film is softened by heating, whereby the laminated glass is deformed in some cases. In particular, when the whole surface of the laminated glass is required to be heated, such as when the display panel is bonded, a strain is liable to occur in the laminated glass.

An object of the present invention is to provide a method for producing a laminated glass, which can suppress deformation of the laminated glass when post-processing with heating is performed to the laminated glass.

The present invention provides a method for producing a laminated glass, as defined in claims 1-9.

According to a method for producing a laminated glass of the present invention, deformation of the laminated glass can be suppressed even when post-processing with heating is performed to the laminated glass. Further, the method for producing a laminated glass of the present invention can also be used as a method for correcting the deformation of a laminated glass.

[FIG. 1] FIG. 1 is a plan view showing an example of laminated glass obtained by a production method of the present invention.
[FIG. 2] FIG. 2 is an A-A cross-sectional view of the laminated glass in FIG. 1.
[FIG. 3] FIG. 3 is a B-B cross-sectional view of the laminated glass in FIG. 1.
[FIG. 4] FIG. 4 is a cross-sectional view showing an example of a production method of the present invention.
[FIG. 5] FIG. 5 is a perspective view showing an example of a frame-shaped holder used in a production method of the present invention.
[FIG. 6] FIG. 6 is a perspective view showing another example of a frame-shaped holder used in a production method of the present invention.
[FIG. 7] FIG. 7 is a plan view showing positions for supporting laminated glass and measuring positions of the curvature.
[FIG. 8] FIG. 8 is a perspective view showing a state of supporting laminated glass with pipes made of SUS in Comparative Example 1.

### <Laminated glass>

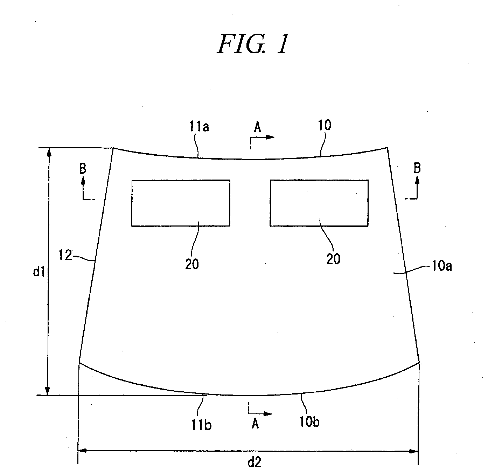

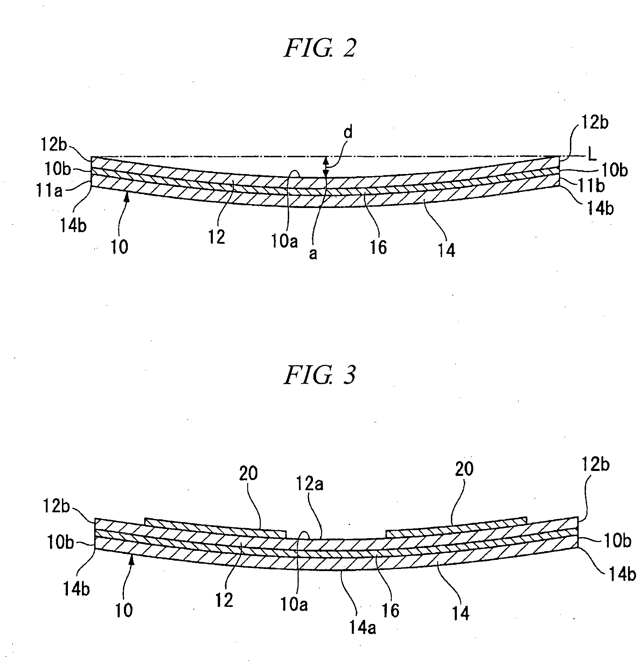

FIGs. 1 to 3 are views showing an example of laminated glass obtained by a production method of the present invention.

Laminated glass 10 includes a first glass plate 12, a second glass plate 14 facing the first glass plate 12 and an intermediate film 16 sandwiched between the first glass plate 12 and the second glass plate 14. The laminated glass 10 is subjected to bending processing so that the surface 10a side is formed in a concave shape. Further, two display panels 20 are bonded on the surface 10a of the laminated glass 10 with an adhesive.

The maximum bending depth of the laminated glass 10 can be appropriately set depending on the use, and it is preferably from 5 to 60 mm and more preferably from 10 to 50 mm.

The "maximum bending depth" is also called doubling, and is a maximum value of bending depth of laminated glass in which glass plates are curved in a concave shape by bending processing. It means the length of a perpendicular line drawn from a deepest point of a concave portion of the laminated glass to a straight line connecting facing peripheral edges to each other in the laminated glass, when the convex side of the laminated glass is directed downward. For example, the "maximum bending depth" of the laminated glass 10 means the length d of a perpendicular line drawn from a deepest point a of a concave portion on the surface 10a of the first glass plate 12 of the laminated glass 10 to a straight line L connecting facing peripheral edges (an upper edge and a lower edge) to each other at the first glass plate 12 of the laminated glass 10, when the convex side of the laminated glass 10 is directed downward.

The larger the numerical value of the maximum bending depth is, the larger the degree of curvature is.

### [Glass plates]

Materials of the first glass plate 12 and the second glass plate 14 are not particularly limited, and include inorganic glass such as soda-lime glass, borosilicate glass, alkali-free glass and quartz glass.

The materials of the first glass plate 12 and the second glass plate 14 may be the same or different from each other.

The shape and the size of the first glass plate 12 and the second glass plate 14 are not particularly limited, and may be appropriately determined depending on the use such as windowpane of automobiles or windowpane of architectural structures.

The planar shape of the first glass plate 12 and the second glass plate 14 of this embodiment is a shape in which a lower edge 11b side is wider than an upper edge 11a side. Further, the first glass plate 12 is curved so as to form a concave shape in which a central portion 12a is lower than a peripheral portion 12b, when the convex side of the laminated glass 10 is directed downward. Similarly, the second glass plate 14 is curved so as to form a concave shape in which a central portion 14a is lower than a peripheral portion 14b, when the convex side of the laminated glass 10 is directed downward. The shape of the first glass plate 12 and the shape of the second glass plate 14 are the same.

The thickness of the first glass plate 12 and the second glass plate 14 can be appropriately determined depending on the use, and it is preferably from 0.5 to 3.0 mm and more preferably from 1.0 to 2.5 mm.

The thickness of the first glass plate 12 and the second glass plate 14 may be the same or different from each other.

### [Intermediate film]

The intermediate film 16 is sandwiched between the first glass plate 12 and the second glass plate 14.

As materials for the intermediate film 16, thermoplastic materials commonly used for intermediate films of laminated glass can be employed, and for example, polyvinyl butyral and the like may be mentioned.

The intermediate film 16 may be either a single layer or a multilayer.

The thickness of the intermediate film 16 is preferably from 0.2 to 1.0 mm and more preferably from 0.3 to 0.8 mm.

### [Display panel]

The display panel 20 is bonded on the surface 10a of the laminated glass 10 with an adhesive. The display panel 20 is not particularly limited, and examples thereof include a liquid crystal panel.

The use of the display panel 20 is not particularly limited. For example, when the laminated glass 10 is used for windshield of an automobile, the display panel 20 may be allowed to act as a sun visor.

The number, the shape and the size of the display panels 20 are not particularly limited, and may be appropriately determined depending on the use. A position at which the display panel 20 is bonded on the surface 10a of the laminated glass 10 is not particularly limited, and may be appropriately determined depending on the use.

In this embodiment, two rectangular display panels 20 are bonded laterally side by side on the upper edge 11a side on the surface 10a of the laminated glass 10.

### [Use]

The use of the laminated glass is not particularly limited, and examples thereof include windowpane of vehicles such as automobiles, and windowpane of architectural structures.

### [Method for producing laminated glass]

As an example of a method for producing a laminated glass of the present invention, there is described below a method for producing the above-mentioned laminated glass 10 to which the display panels 20 are bonded.

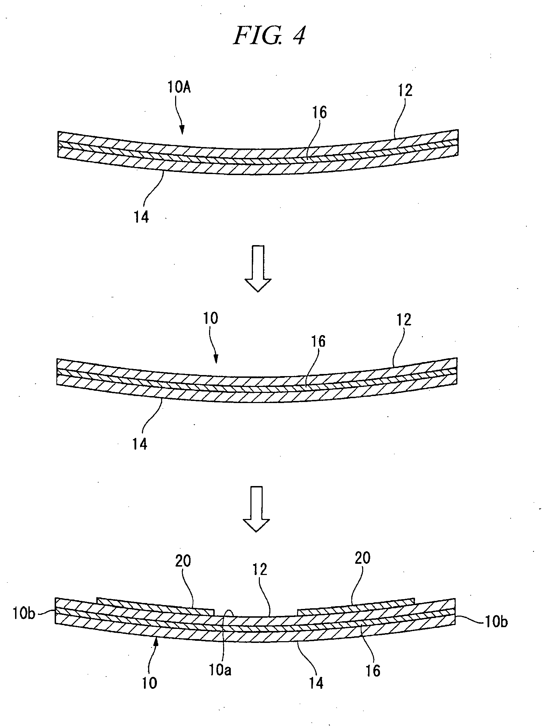

The method for producing the laminated glass 10 of this embodiment includes the following steps (1) to (3):
(1) a step of laminating the first glass plate 12, the intermediate film 16 and the second glass plate 14 in this order to form a laminate 10A, and heating and pressurizing the laminate 10A to obtain the laminated glass 10, as shown in FIG. 4;
(2) a step of performing post-processing with heating to the surface 10a of the laminated glass 10 obtained in the step (1) to bond the display panels 20 thereon; and
(3) a step of cooling the laminated glass 10 while holding at least a part of a peripheral portion 10b of the laminated glass 10, after the step (2).

### [Step (1)]

The first glass plate 12 and the second glass plate 14 each having a curved shape can be produced by known methods. Examples thereof include a method of placing a flat plate-shaped glass plate obtained by known methods on a predetermined pattern which holds only a peripheral portion of the glass plate, followed by subjecting to bending processing in which the glass plate is heated at a temperature equal to or higher than the glass transition temperature thereof in a heating furnace or the like and then cooled. In the bending processing, a central portion of the heated glass plate, which is not held by the pattern, hangs down by gravity, thereby being formed to a concavely curved shape.

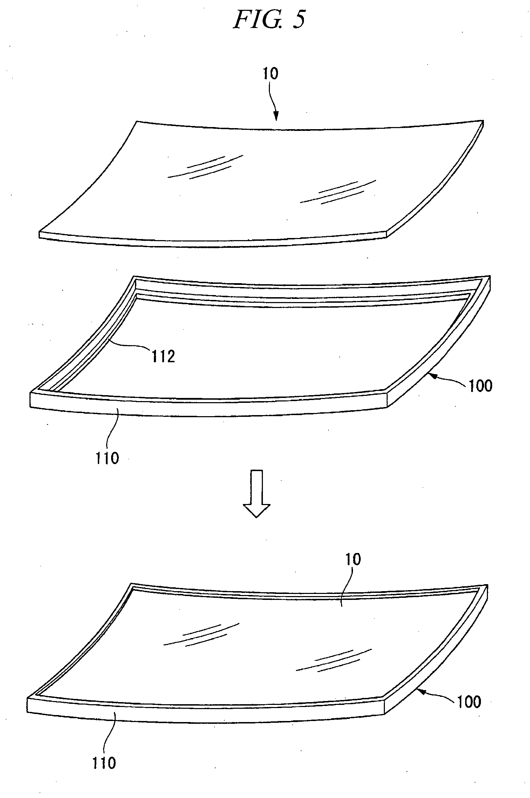

As the pattern used in the bending processing, a frame-shaped holder 100 exemplified in FIG. 5, which will be described below in a method (α) of the step (2), may also be used.

As methods for obtaining the laminated glass 10 by heating and pressurizing the laminate 10A, known methods can be employed, and for example, a method of press-bonding the laminate 10A under heating by using an autoclave, and the like may be mentioned. The heating temperature and the pressure may be appropriately set depending on the kind of the intermediate film.

In the step (1), the laminate 10A may be preliminarily press-bonded. Methods for preliminarily press-bonding the laminate 10A include a method of heating the laminate 10A under reduced pressure.

### [Step (2)]

By the post-processing with heating, the display panels 20 are bonded on the surface 10A of the laminated glass 10 obtained in the step (1). Specifically, for example, the display panels 20 are coated with an adhesive on back sides thereof, attached to the surface 10a of the laminated glass 10, and bonded by heating.

As the adhesive, one which can be bonded by heating can be used. Examples thereof include a thermosetting adhesive tape.

Methods for performing the post-processing with heating to the laminated glass 10 in the step (2) are not particularly limited. However, for example, the following method (α) or method (β) is preferred.
(α) A method of performing the post-processing with heating while holding at least a part of the peripheral portion 10b of the laminated glass 10.
(β) A method of performing the post-processing with heating in a state where the laminated glass 10 is leaned.

When the post-processing with heating is performed to the laminated glass 10, the intermediate film 16 is softened, sometimes resulting in deformation of the laminated glass 10. However, such deformation can be suppressed by employing the method (α) or the method (β).

The method (α) and the method (β) are described below.

### (Method (α))

As a method for holding at least a part of the peripheral portion 10b of the laminated glass 10, a method of placing the laminated glass 10 on a frame-shaped holder and holding at least a part of the peripheral portion 10b of the laminated glass 10 by the holder is preferred.

Specifically, examples thereof include a method of using a frame-shaped holder 100 exemplified in FIG. 5. The holder 100 has a frame portion 110 having the same shape as the planar shape of the laminated glass 10 and a supporting portion 112 formed so as to project inward from the frame portion 110. When the laminated glass 10 is placed on the holder 100 and held, the laminated glass 10 is fitted in the frame portion 110, and the peripheral portion 10b of the laminated glass 10 is supported from below by the supporting portion 112.

Materials of the holder are not particularly limited, and for example, heat-resistant metal materials such as iron and stainless steel, and the like may be mentioned. The use of the same holder as used in the step (1) is preferred in that the cost for the holder can be suppressed, and in that the laminated glass 10 can be held in a desired shape.

The frame-shaped holder is not limited to the above-mentioned holder 100. For example, the holder may not hold the peripheral portion of the laminated glass over the whole periphery thereof. For example, the holder may have a chipped portion so that the laminated glass can be mounted on the holder or removed from the holder by a carrying arm for carrying the laminated glass.

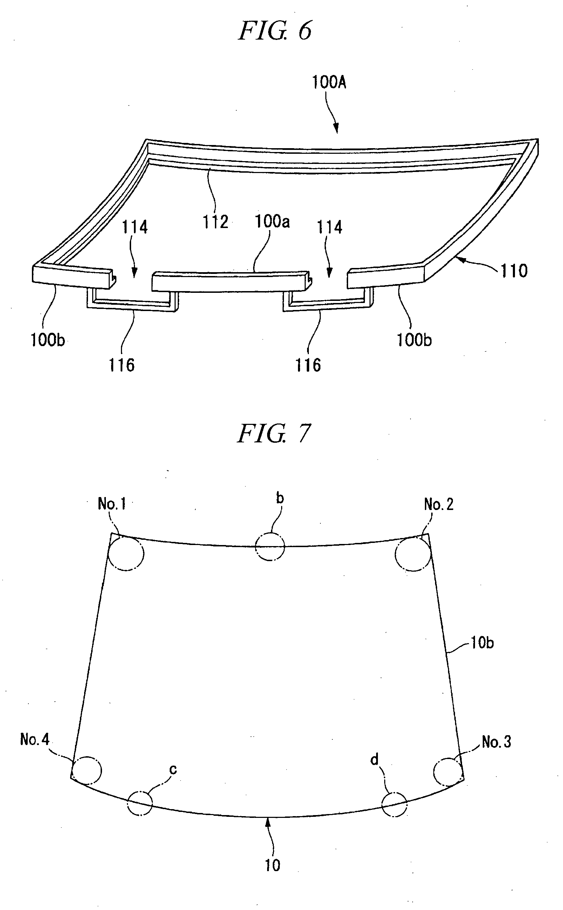

Specifically, for example, a frame-shaped holder 100A shown in FIG. 6 may be used. The holder 100A is the same as the holder 100 except that two chipped portions 114 are formed in the frame portion 110 and the supporting portion 112, and a portion 100a positioned between the two chipped portions 114 and each of portions 100b on both sides of the chipped portions 114 are connected to each other by a connecting portion 116.

In the case of using the holder 100A, for example, the laminated glass 10 is carried in such a manner that the carrying arms are positioned in portions corresponding to the chipped portions 114 when the laminated glass 10 is placed on the holder 100A, and is placed on the holder 100A. At this time, the carrying arms come to the positions of the chipped portions 114 of the holder 100A, and therefore, the carrying arms do not contact with the frame portion 110 and the supporting portion 112 of the holder 100A. Further, after the post-processing with heating, the laminated glass 10 is held at the positions of the chipped portions 114 of the holder 100A by the carrying arms and removed. By performing work as described above, the laminated glass 10 can be easily mounted on the holder 100A and removed therefrom.

Further, the method (α) is not limited to the method of using the frame-shaped holder. For example, it may be a method of using a mold in which a concave portion having a shape complementary to the shape of the laminated glass is formed, fitting the laminated glass in the concave portion of the mold, and performing the post-processing with heating while holding the whole surface of the laminated glass by the mold.

### (Method (β))

A mode of leaning the laminated glass may be any as long as the laminated glass can be maintained in a state of leaning in performing the post-processing with heating, and is not particularly limited.

Examples thereof include a mode of leaning the laminated glass 10 by supporting the peripheral portion 10b thereof at 3 points with a jig having supporting parts for supporting each of a total of 3 points of one point (a portion b in FIG. 7) at the center of the upper edge 11a of the peripheral portion 10b in the laminated glass 10 and 2 points (portions c and d in FIG. 7) on both end sides of the center of the lower edge 11b.

In the step (2), the method (α) is preferred in that the deformation of the laminated glass is more easily suppressed, and in that the step (2) and the step (3) can be continuously smoothly performed while placing the laminated glass on the holder.

The heating temperature in the step (2) is from 80 to 100°C. For example, in the case of bonding the display panel with the thermosetting adhesive tape, when the heating temperature in the step (2) is equal to or higher than the lower limit value of the above-mentioned range, adhesive force of the thermosetting adhesive tape can be sufficiently exhibited. When the heating temperature in the step (2) is equal to or lower than the upper limit value of the above-mentioned range, deterioration of the thermosetting adhesive tape can be prevented.

Methods of heating the laminated glass are not particularly limited, and for example, an oven, a heating furnace and the like may be mentioned.

### [Step (3)]

In the step (3), the laminated glass heated in the step (2) is cooled while holding at least a part of the peripheral portion thereof. By cooling the laminated glass while holding at least a part of the peripheral portion thereof, the laminated glass can be suppressed from being deformed at the time of cooling, even when the intermediate film is softened in the step (2).

Methods for holding at least a part of the peripheral portion of the laminated glass in the step (3) include the same methods as mentioned in the method (α) of the step (2). In the step (3), from the point that cooling can be efficiently performed while suppressing the deformation of the laminated glass, it is preferred to place the laminated glass 10 on the frame-shaped holder and to cool it while holding at least a part of the peripheral portion 10b of the laminated glass 10 by the holder. In the step (3), using a mold in which a concave portion having a shape complementary to the shape of the laminated glass is formed, and fitting the laminated glass in the concave portion of the mold, the whole surface of the laminated glass may be held by the mold.

When the post-processing with heating is performed in the state of holding at least a part of the peripheral portion of the laminated glass in the step (2), the cooling of the step (3) is preferably performed in the state as it is.

In the step (3), it is cooled to 60°C or lower, more preferably to 50°C or lower, still more preferably to 40°C or lower. The occurrence of deformation in the laminated glass obtained can be more stably suppressed by performing the cooling in the step (3) to a temperature equal to or lower than the above-mentioned upper limit value.

Methods for cooling the laminated glass are not particularly limited, and for example, a method of using an air blower, and the like may be mentioned. Further, the laminated glass may be naturally cooled.

The variation of the maximum bending depth of the laminated glass 10 obtained in the step (3) to the maximum bending depth of the laminated glass 10 obtained in the step (1) is preferably 5 mm or less, and more preferably 3 mm or less.

The maximum bending depth of the laminated glass is measured by a depth gauge.

The variation of the curvature of the laminated glass 10 obtained in the step (3) to the curvature of the laminated glass 10 obtained in the step (1) is preferably 2 mm or less, and more preferably 1 mm or less.

The variation of the curvature is measured at each of 4 points in a plane of the laminated glass, and determined as an average value thereof.

### [Function effect]

In the method for producing a laminated glass of the present invention described above, cooling is performed while holding at least a part of the peripheral portion of the laminated glass in the step (3), after the post-processing with heating is performed in the step (2). Accordingly, even when the intermediate film is softened by heating, the laminated glass in which the occurrence of deformation is suppressed can be obtained.

According to the method for producing a laminated glass of the present invention, even in the laminated glass having a curved shape, such as the laminated glass 10, the deformation thereof can be sufficiently suppressed. It is therefore effective for the production of windshield of vehicles, particularly for the production of windshield of automobiles.

The method for producing a laminated glass of the present invention is not limited to the methods described above.

According to the present invention, the post-processing with heating in the step (2) may also be a method of performing processing of bonding a part other than the display panel, such as a room mirror base or a rain sensor, on the surface of the laminated glass, or may be a method of performing processing of forming an organic or inorganic cured film such as an UV-ray cutting film or a water-repellent film on the surface of the laminated glass. Further, when the laminated glass obtained in the step (1) has strain, it may be a method of correcting the deformation thereof by the post-processing with heating in the step (2) and the step (3).

The production method of the present invention is particularly effective in the case where the laminated glass is required to be widely heated, such as the case of bonding the display panel and the like or the case of correcting the strain of the laminated glass.

### EXAMPLES

The present invention is described in detail below with reference to Examples, but the present invention is not limited by the following description.

### [Production Example 1] (Forming of glass plate)

A flat plate-shaped glass plate of 1000 mm in length (length d1 in FIG. 1)×1500 mm in width (length d2 in FIG. 1)×2 mm in thickness having the same planar shape as the laminated glass 10 exemplified in FIG. 1 was placed on a frame-shaped stainless steel holder 100 (FIG. 5) having the same shape as the glass plate. The glass plate is supported only at a peripheral portion thereof by the holder 100. The glass plate was carried in this state into a heating furnace by a carrying conveyor, and heated by a heater in the heating furnace. A central portion of the glass plate, which was not supported by the holder 100, hung down by gravity, thereby obtaining a concave glass plate with the central portion lowered.

### [Example 1]

An intermediate film made of polyvinyl butyral was sandwiched between the two concave glass plates having the same shape, which were obtained in Production Example 1, to obtain a laminate in which the glass plate/the intermediate film/the glass plate were laminated in this order. The above-mentioned laminate was placed in a rubber vacuum bag, held at 60°C for 30 minutes with suction under reduced pressure, and further held at 100°C for 60 minutes to perform preliminary press bonding. The laminate preliminarily press-bonded was placed in an autoclave, and heated and pressurized at 140°C and 13 atm (1.3×10⁶ Pa) for 30 minutes to obtain a laminated glass 10 shown in FIG. 7. (Step (1))

The laminated glass 10 obtained was supported at each of a total of 3 points of one point (the portion b in FIG. 7) at the center of the upper edge of the peripheral portion 10b thereof and 2 points (the portions c and d in FIG. 7) on both end sides of the center of the lower edge, and was leaned on a carriage so that the longitudinal direction of the laminated glass 10 was vertically directed. In this state, the laminated glass was heated in an oven at an atmospheric temperature of 100°C for 30 minutes. (Step (2))

The laminated glass heated in the step (2) was placed on a holder 100 with a surface on the convex side thereof directed downward, and cooled to 40°C in a state where a peripheral portion of the laminated glass was held by the holder 100. (Step 3)

### [Example 2]

Laminated glass was obtained in the same manner as in Example 1, except that in the step (2), the laminated glass 10 was heated in the oven at an atmospheric temperature of 100°C for 30 minutes in a state where it was placed on the holder 100.

### [Comparative Example 1]

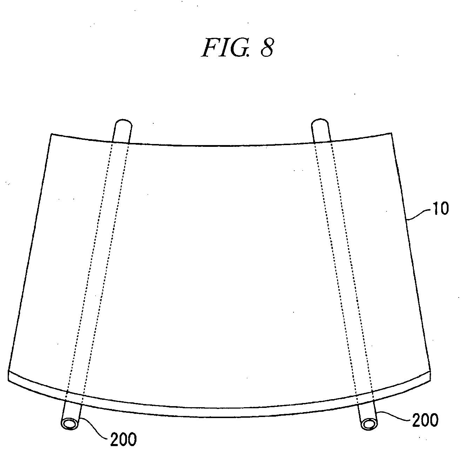

Laminated glass was obtained in the same manner as in Example 1, except that in the step (2) and the step (3), heating and cooling were performed in a state where the laminated glass 10 was supported from below at both sides of the center portion in a lateral direction on a surface of the concave side thereof by two pipes 200 made of SUS, as shown in FIG. 8, and that it was cooled to 40°C in the step (3).

### [Evaluation methods]

### (Variation of curvature)

Using a pattern having a concave portion obtained by patterning the shape of the desired laminated glass, that is, the shape of the laminated glass obtained in the step (1) (this pattern is hereinafter also described as a pattern A), the laminated glass obtained in the step (3) of each Example was placed on the concave portion of the pattern A, and the variation of the curvature based on the pattern A was measured by using a thickness gauge or a taper gauge. The curvature of a bottom surface of the concave portion of the pattern A is the same as the curvature of the laminated glass obtained in the step (1), and the variation of the curvature based on the pattern A is the same as the variation of the curvature of the laminated glass obtained in the step (3) to the curvature of the laminated glass obtained in the step (1).

Measuring points were 4 points of corners of No. 1 to No. 4 shown in FIG. 7 in the laminated glass.

### (Variation of maximum bending depth)

The laminated glass was held with the convex side thereof directed downward, and a depth gauge was installed so as to bridge a center portion of an upper edge of the laminated glass and a center portion of a lower edge thereof. The distance from the deepest point of the concave portion of the laminated glass to the depth gauge was measured as the maximum bending depth.

The variation of the curvature of the laminated glass obtained in the step (3) to the curvature of the laminated glass obtained in the step (1) and the variation of the maximum bending depth of the laminated glass obtained in the step (3) to the maximum bending depth of the laminated glass obtained in the step (1) in each measuring point are shown in Table 1.

**Table 1**

| | | Example 1 | Example 2 | Comparative Example 1 |
|---|---|---|---|---|
| Variation of Curvature [mm] | No. 1 | 0.3 | 0.1 | 1.2 |
| | No. 2 | 0.3 | 0 | 1.3 |
| | No. 3 | 0.3 | 0.1 | 1.1 |
| | No. 4 | 0.2 | 0 | 1.5 |
| Variation of Maximum Bending Depth [mm] | | 0.4 | 0.2 | 5.5 |

As shown in Table 1, in the laminated glass of Examples 1 and 2 produced by the production method of the present invention, the variation of the curvature and the variation of the maximum bending depth before and after the post-processing with heating were small, and the laminated glass was suppressed from being deformed.

On the other hand, in the laminated glass of Comparative Example 1 which was cooled without holding the peripheral portion of the laminated glass in the step (3), the variation of the curvature and the variation of the maximum bending depth before and after the post-processing with heating were large, and the occurrence of deformation of the laminated glass was observed.

### DESCRIPTION OF REFERENCE NUMERALS AND SIGNS

- 10:: Laminated glass
- 10A:: Laminate
- 10b:: Peripheral portion
- 12:: First glass plate
- 14:: Second glass plate
- 16:: Intermediate film
- 100, 100A:: Holder

## Claims

1. A method for producing a laminated glass which comprises a first glass plate, a second glass plate facing the first glass plate and an intermediate film sandwiched between the first glass plate and the second glass plate, the method comprising the following steps (1) to (3):
(1) a step of laminating the first glass plate, the intermediate film and the second glass plate in this order to form a laminate, and heating and pressurizing the laminate to obtain a laminated glass;
(2) a step of performing post-processing with heating to the laminated glass obtained in the step (1); and
(3) a step of cooling the laminated glass while holding at least a part of a peripheral portion of the laminated glass, after the step (2);
wherein a heating temperature in the step (2) is from 80 to 100°C,
wherein, in the step (3), the laminated glass is cooled to 60°C or lower, and
wherein the post processing with heating in step (2) is a method of performing processing of bonding a display panel, a room mirror base or a rain sensor on a surface of the laminated glass, or a method of performing processing of forming an organic and inorganic cured film on the surface of the laminated glass.

2. The method for producing a laminated glass according to claim 1, wherein, in the step (3), the laminated glass is placed on a frame-shaped holder, and at least a part of the peripheral portion of the laminated glass is held by the holder.

3. The method for producing a laminated glass according to claim 1 or 2, wherein, in the step (2), the post-processing with heating is performed while holding at least a part of the peripheral portion of the laminated glass.

4. The method for producing a laminated glass according to claim 3, wherein, in the step (2), the laminated glass is placed on a frame-shaped holder, and at least a part of the peripheral portion of the laminated glass is held by the holder.

5. The method for producing a laminated glass according to claim 1 or 2, wherein, in the step (2), the post-processing with heating is performed in a state where the laminated glass is leaned.

6. The method for producing a laminated glass according to any one of claims 1 to 5, wherein a variation of a maximum bending depth of the laminated glass obtained in the step (3) to a maximum bending depth of the laminated glass obtained in the step (1), as determined according to the description, is 5 mm or less.

7. The method for producing a laminated glass according to any one of claims 1 to 6, wherein a variation of a curvature of the laminated glass obtained in the step (3) to a curvature of the laminated glass obtained in the step (1), as determined according to the description, is 1 mm or less.

8. The method for producing a laminated glass according to any one of claims 1 to 7, wherein the laminated glass is a laminated glass for a windshield of a vehicle.

9. The method for producing a laminated glass according to claim 8, wherein the vehicle is an automobile.

## Patentansprüche

1. Verfahren zur Herstellung eines Verbundglases, das eine erste Glasplatte, eine zweite Glasplatte, die der ersten Glasplatte gegenüberliegt, und einen Zwischenfilm, der zwischen der ersten Glasplatte und der zweiten Glasplatte eingeschoben ist, umfasst, wobei das Verfahren die nachstehenden Schritte (1) bis (3) umfasst:
(1) einen Schritt des Laminierens der ersten Glasplatte, des Zwischenfilms und der zweiten Glasplatte in dieser Reihenfolge, um ein Laminat zu bilden, und des Erwärmens und Druckbeaufschlagens des Laminats, um ein Verbundglas zu erhalten;
(2) einen Schritt des Durchführens einer Nachbearbeitung mit Erwärmen des in Schritt (1) erhaltenen Verbundglases; und
(3) einen Schritt des Abkühlens des Verbundglases, während mindestens ein Teil eines Umfangsabschnitts des Verbundglases gehalten wird, nach dem Schritt (2);
wobei eine Erwärmungstemperatur in dem Schritt (2) von 80 bis 100°C beträgt,
wobei in dem Schritt (3) das Verbundglas auf 60°C oder weniger abgekühlt wird, und
wobei die Nachbearbeitung mit Erwärmen in Schritt (2) ein Verfahren zur Durchführung der Bearbeitung des Verbindens einer Anzeigeplatte, einer Raumspiegelbasis oder eines Regensensors auf eine Oberfläche des Verbundglases, oder ein Verfahren zur Durchführung der Bearbeitung des Bildens eines organischen und anorganischen gehärteten Films auf der Oberfläche des Verbundglases ist.

2. Verfahren zur Herstellung eines Verbundglases nach Anspruch 1, wobei in dem Schritt (3) das Verbundglas auf einen rahmenförmigen Halter gesetzt wird und mindestens ein Teil des Umfangabschnitts des Verbundglases von dem Halter gehalten wird.

3. Verfahren zur Herstellung eines Verbundglases nach Anspruch 1 oder 2, wobei in dem Schritt (2) die Nachbearbeitung mit Erwärmen durchgeführt wird, während mindestens ein Teil des Umfangsabschnitts des Verbundglases gehalten wird.

4. Verfahren zur Herstellung eines Verbundglases nach Anspruch 3, wobei in dem Schritt (2) das Verbundglas auf einen rahmenförmigen Halter gesetzt wird und mindestens ein Teil des Umfangabschnitts des Verbundglases von dem Halter gehalten wird.

5. Verfahren zur Herstellung eines Verbundglases nach Anspruch 1 oder 2, wobei in dem Schritt (2) die Nachbearbeitung mit Erwärmen in einem Zustand durchgeführt wird, in dem das Verbundglas gelagert ist.

6. Verfahren zur Herstellung eines Verbundglases nach einem der Ansprüche 1 bis 5, wobei eine Abweichung einer maximalen Biegetiefe des in dem Schritt (3) erhaltenen Verbundglases zu einer maximalen Biegetiefe des in dem Schritt (1) erhaltenen Verbundglases, wie gemäß der Beschreibung bestimmt, 5 mm oder weniger beträgt.

7. Verfahren zur Herstellung eines Verbundglases nach einem der Ansprüche 1 bis 6, wobei eine Abweichung einer Krümmung des in dem Schritt (3) erhaltenen Verbundglases zu einer Krümmung des in dem Schritt (1) erhaltenen Verbundglases, wie gemäß der Beschreibung bestimmt, 1 mm oder weniger beträgt.

8. Verfahren zur Herstellung eines Verbundglases nach einem der Ansprüche 1 bis 7, wobei das Verbundglas ein Verbundglas für eine Windschutzscheibe eines Fahrzeugs ist.

9. Verfahren zur Herstellung eines Verbundglases nach Anspruch 8, wobei das Fahrzeug ein Automobil ist.

## Revendications

1. Procédé de production d'un verre stratifié qui comprend une première plaque de verre, une seconde plaque de verre tournée vers la première plaque de verre et un film intermédiaire pris en sandwich entre la première plaque de verre et la seconde plaque de verre, le procédé comprenant les étapes suivantes (1) à (3) :
(1) une étape consistant à stratifier la première plaque de verre, le film intermédiaire et la seconde plaque de verre dans cet ordre pour former un stratifié, et chauffer et pressuriser le stratifié pour obtenir un verre stratifié ;
(2) une étape consistant à réaliser un post-traitement avec chauffage sur le verre stratifié obtenu à l'étape (1) ; et
(3) une étape consistant à refroidir le verre stratifié tout en maintenant au moins une partie d'une portion périphérique du verre stratifié après l'étape (2) ;
dans lequel une température de chauffage à l'étape (2) va de 80 à 100°C,
dans lequel, à l'étape (3), le verre stratifié est refroidi à 60°C ou moins, et
dans lequel le post-traitement avec chauffage à l'étape (2) est un procédé consistant à réaliser un traitement d'assemblage d'un panneau d'affichage, d'une base de miroir de salon ou d'un capteur de pluie sur une surface du verre stratifié, ou un procédé consistant à réaliser un traitement de formation d'un film durci organique et inorganique sur la surface du verre stratifié.

2. Procédé de production d'un verre stratifié selon la revendication 1, dans lequel, à l'étape (3), le verre stratifié est placé sur un support en forme de cadre, et au moins une partie de la portion périphérique du verre stratifié est maintenue par le support.

3. Procédé de production d'un verre stratifié selon la revendication 1 ou 2, dans lequel, à l'étape (2), le post-traitement avec chauffage est réalisé tout en maintenant au moins une partie de la portion périphérique du verre stratifié.

4. Procédé de production d'un verre stratifié selon la revendication 3, dans lequel, à l'étape (2), le verre stratifié est placé sur un support en forme de cadre, et au moins une partie de la portion périphérique du verre stratifié est maintenue par le support.

5. Procédé de production d'un verre stratifié selon la revendication 1 ou 2, dans lequel, à l'étape (2), le post-traitement avec chauffage est réalisé dans un état où le verre stratifié est penché.

6. Procédé de production d'un verre stratifié selon l'une quelconque des revendications 1 à 5, dans lequel une variation d'une profondeur de bombage maximale du verre stratifié obtenu à l'étape (3) sur une profondeur de bombage maximale du verre stratifié obtenu à l'étape (1), telle que déterminée en fonction de la description, est de 5 mm ou moins.

7. Procédé de production d'un verre stratifié selon l'une quelconque des revendications 1 à 6, dans lequel une variation d'une courbure du verre stratifié obtenu à l'étape (3) sur une courbure du verre stratifié obtenu à l'étape (1), telle que déterminée en fonction de la description, est de 1 mm ou moins.

8. Procédé de production d'un verre stratifié selon l'une quelconque des revendications 1 à 7, dans lequel le verre stratifié est un verre stratifié pour un pare-brise d'un véhicule.

9. Procédé de production d'un verre stratifié selon la revendication 8, dans lequel le véhicule est une automobile.
